Europäisches Patentamt

European Patent Office

Office européen des brevets

(11) Veröffentlichungsnummer: **0 508 063 A2**

# EUROPÄISCHE PATENTANMELDUNG

(21) Anmeldenummer: **92102378.4**

(51) Int. Cl.5: **H04M 1/11**

(22) Anmeldetag: **13.02.92**

(30) Priorität: **14.03.91 DE 4108160**

(43) Veröffentlichungstag der Anmeldung:
**14.10.92 Patentblatt 92/42**

(84) Benannte Vertragsstaaten:
**AT CH DE ES FR GB IT LI NL**

(71) Anmelder: **Albert Ackermann GmbH & Co. KG**
**Albertstrasse 4-8**
**W-5270 Gummersbach 1(DE)**

(72) Erfinder: **Becker, Johan, Dipl.-Ing.**
**Prof.-Sauerbruch-Weg 5**
**W-5270 Gummersbach(DE)**

(74) Vertreter: **Wilhelm & Dauster Patentanwälte**
**European Patent Attorneys**
**Hospitalstrasse 8**
**W-7000 Stuttgart 1(DE)**

(54) **Bett-Bediengerät für Ruf- und Sprechanlagen in Krankenhäusern o.dgl.**

(57) 2.1 Die Vielzahl von gewünschten Funktionen macht es notwendig, bei Bauarten nach dem Stand der Technik auch eine entsprechende Vielzahl von Gehäusen mit eingebauten Geräten zur Verfügung zu stellen.

2.2 Es wird vorgeschlagen, das Gehäuse aus einem gezogenen, einseitig offenen und auf Länge abgeschnittenen Profil und aus diesen Profil zugeordneten Abdeckplatten aufzubauen, die mit sichtbaren Bedienungsfeldern und mit angebauten Geräten versehen sind und modulartig wahlweise nebeneinander in Aufnahmeleisten des Profils einsetzbar sind.

2.3 Verwendung für Krankenhausbett-Bedienungsgeräte.

Fig. 1

Die Erfindung betrifft ein Bett-Bediengerät für Ruf- und Sprechanlagen in Krankenhäusern o.dgl., mit einem Gehäuse, mit in das Gehäuse eingesetzten Anschlußgeräten für die Ruf- und Sprechanlagen und mit von außen zugänglichen Bedienungseinrichtungen zur Betätigung der Funktionen der Ruf- und Sprechanlage.

Ein Bett- und Bedienungsgerät dieser Art ist aus der DE 38 26 083 C2 bekannt. Bei dieser bekannten Bauart ist ein Gehäuse vorgesehen, das über einen schwenkbaren Bügel an einem Tisch befestigbar ist und das eine Halterung zum Auflegen eines in der Form eines Handapparates ausgebildeten Fernsprechapparates mit eingebauter Wähltastatur aufweist. Am Gehäuse ist außerdem ein Bedienungsfeld mit Ruftasten und Einstellknöpfen vorgesehen, mit denen beispielsweise der Schwesternruf möglich ist oder Rundfunkprogramme o.dgl. einstellbar sind.

Bett-Bediengeräte dieser Art genügen den heutigen Anforderungen nicht in allen Fällen. Am Krankenbett sollen heute je nach Situation und finanzieller Leistungskraft eine Fülle von Einstellmöglichkeiten vorgesehen sein, die nicht in Gehäusen mit vorgegebenen Abmessungen angeordnet werden können. So soll beispielsweise ein unbeweglicher Patient einen Rufknopf in die Hand bekommen, der aber auch noch stationär verfügbar sein soll, wenn er aus irgendeinem Grund dem Kranken aus der Hand fallen sollte. Es wird eine Möglichkeit gewünscht, mit der Schwester über eine Patientenrufanlage zu sprechen, und zwar nach Wahl des Patienten diskret oder offen. Es sollen außerdem Möglichkeiten vorgesehen werden, neben der Einstellung eines Rundfunkprogrammes auch ein Fernsehgerät bedienen zu können und es sollen in immer größerem Maß Licht-, Jalousie-, Lüftungs- oder andere Steuerungsschalter betätigt werden. Dazu kommt natürlich auch, daß Abrechnungseinheiten für Telefongespräche oder für das Fernsehgerät mit vorgesehen sein sollen. Alle diese Wahlmöglichkeiten und Ausgestaltungsmöglichkeiten vorzusehen, würde bedeuten, daß eine Unzahl verschiedener Gehäuseformen mit den entsprechenden Einbauten vorgesehen sein muß, was wirtschaftlich aber nicht möglich ist.

Der vorliegenden Erfindung liegt daher die Aufgabe zugrunde, ein Bett-Bediengerät der eingangs genannten Art so auszugestalten, daß auf der Basis einer Gehäuseform wahlweise verschiedene Ausgestaltungsmöglichkeiten vorgenommen werden können.

Zur Lösung dieser Aufgabe wird bei einem Bett-Bediengerät der eingangs genannten Art vorgesehen, daß das Gehäuse aus einem gezogenen, einseitig offenen und auf Länge abgeschnittenen Profil und aus diesem Profil zugeordneten Abdeckplatten besteht, die sichtbare Bedienungsfelder und angebaute Geräte aufweisen und modulartig wahlweise nebeneinander in Aufnahmeleisten des Profiles einsetzbar sind. Durch diese Ausgestaltung wird es möglich, auf der Basis nur eines Ausgangsprofiles Bett-Bediengeräte mit Gehäusen verschiedener Länge zu versehen, die dann durch Aufsetzen der Abdeckplatten, die jeweils mit verschiedenen Geräten und Bedienungsfeldern versehen sein können, alle gewünschten Funktionen in einem Gehäuse vorsehen. Dabei ist es in vorteilhafter Ausgestaltung der Erfindung auch möglich, den Abdeckplatten Platinen für Installationsgeräte zuzuordnen, die ebenfalls in das Gehäuse einschiebbar oder einsetzbar ausgebildet sind, so daß jedem Bedienungsfeld auf der Abdeckplatte, falls notwendig, auch die zugehörigen Platinen und Installationsgeräte in einem Gehäuseabschnitt zugeordnet sind, während daneben ein anderer Abschnitt ausgebildet sein kann.

In einfacher Weise können die Tragplatten und die Abdeckplatten seitlich in Längsnuten des Profiles eingeschoben werden, und es kann dann vorgesehen sein, daß an den seitlichen offenen Stirnenden des Profiles Abschlußplatten angeordnet werden, die ein weiteres Verschieben der eingeschobenen Abdeck- und/oder Tragplatten verhindern.

Das gezogene und als Basis für das Gehäuse vorgesehene Profil kann in weiterer Ausgestaltung an einer Unterkante eine durchgehende und nach außen offene Ausnehmung zur Aufnahme einer Beleuchtungseinrichtung aufweisen, so daß dem Gehäuse unmittelbar auch eine Leselampe o.dgl. zugeordnet werden kann, die das Einschalten der Raumbeleuchtung überflüssig macht. Diese Ausnehmung kann durch eine transparente Scheibe abgeschlossen werden, zumindest in dem Bereich, wo auch die Beleuchtungseinrichtung vorgesehen ist. Wenn die Beleuchtung nicht über die gesamte Gehäuselänge durchgehen soll, dann ist es auch möglich, seitlich neben der transparenten Scheibe entsprechend geformte, aber undurchsichtige Abdeckplattenstücke vorzusehen.

Das gezogene Profil kann vorteilhaft außerdem aber auch eine Aussparung zum Ansetzen einer Halterung für das Gehäuse aufweisen, so daß in diese Aussparung von der einen oder anderen Stirnseite her wahlweise die Halterung angeschlossen werden kann. Für den Fall, daß seitliche Abschlußplatten vorgesehen sind, müssen diese mit entsprechenden Durchlaßöffnungen versehen sein. Diese Abschlußplatten können in einfacher Weise angeklipst oder angeschraubt werden, wobei an dem die Basis für das Gehäuse bildenden Profil entsprechende Profilierungen zum Einsetzen von Rastzapfen oder zum Eindrehen entsprechender Befestigungsschrauben vorgesehen sein können.

Ein Ausführungsbeispiel der Erfindung ist in der Zeichnung dargestellt und wird im folgenden erläutert. Es zeigen:

Fig. 1 die schematische Draufsicht auf ein Bett-Bedienungsgerät gemäß der Erfindung,

Fig. 2 die Seitenansicht des Bett-Bedienungsgerätes der Fig. 1,

Fig. 3 eine etwas vergrößerte Darstellung eines Querschnittes durch das Bett-Bedienungsgerät der Fig. 1 längs der Linie III-III in Fig. 1,

Fig. 4 eine Ansicht einer der seitlichen Abschlußplatten des Bettbedienungsgerätes der Fig. 1 von der Innenseite her gesehen und

Fig. 5 den Schnitt durch diese Abschlußplatte längs der Linie V-V in Fig. 4.

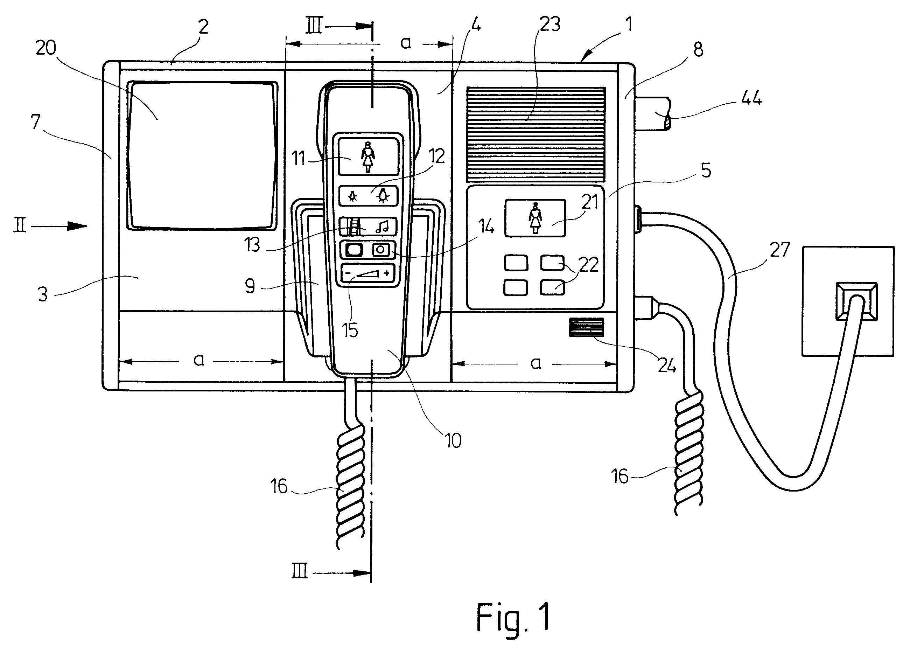

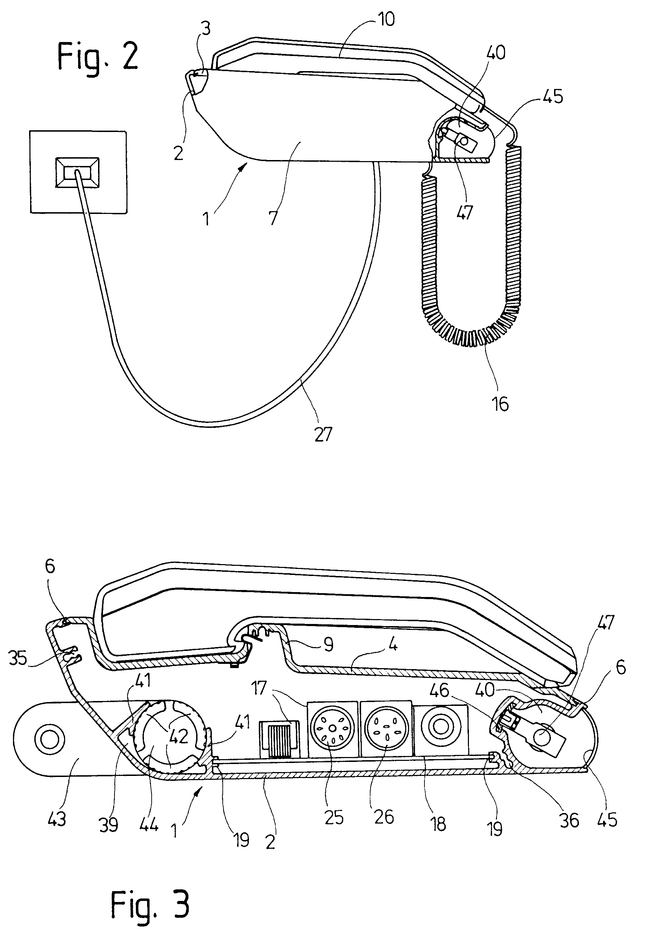

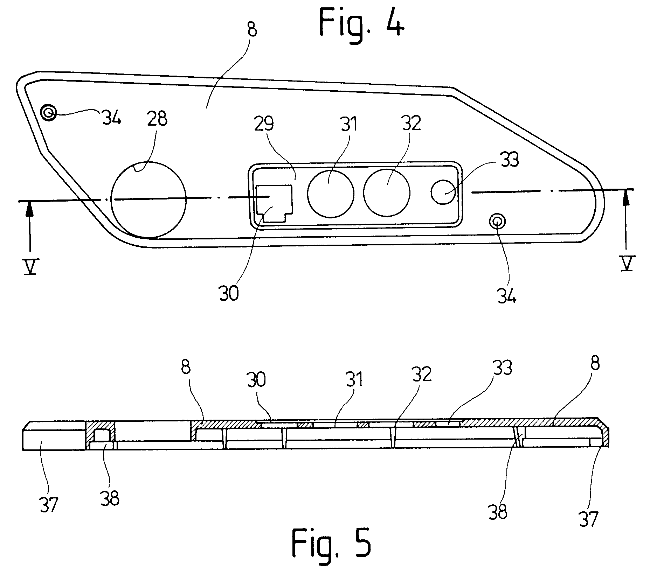

In den Fig. 1 bis 3 ist ein Bett-Bedienungsgerät gezeigt, das ein Gehäuse (1) besitzt, welches aus einem gezogenen und den Gehäuseboden bildenden Profil (2) und aus diesem Profil (2) zugeordneten Abdeckplatten (3, 4 und 5) besteht, die jeweils mit sichtbaren Bedienungsfeldern auf das Profil (2) aufgesetzt sind. Die Fig. 3 zeigt, daß dies dadurch geschehen ist, daß diese Abdeckplatten, zum Beispiel die in Fig. 3 gezeigte Abdeckplatte (4), in der Art einer Nutfederverbindung von der Seite her in Längsnuten (6) des Profiles (2) eingeschoben ist, welches vor dem Zusammenbau an der später von den Abdeckplatten (3, 4 und 5) eingenommenen Seite offen ist. Dieses gezogene Profil (2), das beispielsweise aus Aluminium oder aus Kunststoff bestehen kann, wird auf Länge abgeschnitten, und zwar auf eine solche Länge, die sich aus der Anzahl der nebeneinander zu setzenden Abdeckplatten (3, 4 und 5) ergibt. Beim Ausführungsbeispiel besitzen diese Abdeckplatten jeweils die gleiche Breite (a). Die Länge des Profiles (2) entspricht daher der Länge 3 x (a). Werden mehr Abdeckplatten vorgesehen, so wird die Länge des Profiles (2) entsprechend länger gewählt. Nach dem Einsetzen der Abdeckplatten (3, 4 und 5) werden die noch offenen Stirnseiten des aus dem Profil (2) und den Abdeckplatten (4) gebildeten Hohlkörpers durch Abschlußplatten (7 und 8) verschlossen, von denen die Abschlußplatte (8) von ihrer Innenseite her gesehen in der Fig. 4 gezeigt ist.

Jede der Abdeckplatten (3, 4 und 5) bildet eine Art Modul. Ihr zugeordnet sind nämlich jeweils Bedienungsgeräte oder Bedienungsfelder, die eine bestimmte Funktion erfüllen. Die Abdeckplatte (4) ist beispielsweise mit einer Halterung (9) für einen als Handapparat (10) ausgebildeten Telefonhörer versehen, der als mobile Betätigungseinheit für eine Schwesternruftaste (11), für die Betätigung von Lichtschaltern (12), für die Wahl von Rundfunkprogrammen (13), für das Ein- und Ausschalten des Fernsehapparates (14) und mit einer Taste (15) versehen sein kann, mit der eine Laut/Leise-Regulierung der Lautstärke des eingestellten Rundfunk-oder Fernsehprogrammes möglich ist. Der Handapparat (10) kann auf seiner vom Betrachter abgewandten Seite auch die übliche Tastatur für einen Fernsprechapparat aufweisen. Er ist über ein Kabel (16) mit den notwendigen Anschlußgeräten (17) im Inneren des Gehäuses (1) verbunden, die auf einer Platine (18) angeordnet sind, die ebenfalls in seitliche Führungsnuten (19) im Profil (2) eingeschoben ist. Die Platine (18) ist dem Bereich der Abdeckplatte (4) und damit dem Handapparat (10) zugeordnet. Die Abdeckplatte (4) bildet daher, hier zusammen mit der Platine (18) und den Geräten (17) einen Modul, mit dem bestimmte, nämlich die vorher geschilderten Bedienungs- und Rufvorgänge durchgeführt werden können.

Die Abdeckplatte (3) ist mit einem Klein-Fernsehapparat (20) bestückt, der über den Handapparat (10) bedienbar ist, aber selbstverständlich auch auf der Abdeckplatte (3) mit Ein- und Ausschaltknöpfen versehen sein könnte. Soweit notwendig, kann auch der Abdeckplatte (3) eine Platine mit entsprechenden Anschlußgeräten zugeordnet sein. Das gilt auch für die Abdeckplatte (5), welche die stationäre Anordnung einer Schwesternruftaste (21) aufweist sowie weitere Bedienungsknöpfe (2) oder Anzeigeleuchten (22) und einen Lautsprecher (23) sowie ein Mikrophon (24). Auch hier ist die Zuordnung einer Platine, die ebenfalls die Breite (a) aufweist, zu der Abdeckplatte (5) und den Bedienungsknöpfen möglich, auf der die notwendigen Installationsgeräte und, was noch erwähnt werden muß, natürlich auch Verbindungsstecker oder Buchsen zur Verbindung mit benachbarten Modulen angeordnet sein können. Zwei solcher Steckbuchsen (25 und 26) sind beispielhaft in Fig. 3 auf der Platine (18) gezeigt. Alle Modulteile schließlich können über seitliche Anschlüsse, die durch die Abschlußplatten (8 oder 7) herausgeführt werden, auch mit einer Datenaustauschleitung (27) verbunden sein, die an ein krankenhauseigenes, fest installiertes Leitungssystem angeschlossen ist. Das Kabel (16) wird ebenfalls seitlich angeschlossen und steht, was im einzelnen nicht dargestellt ist, mit den zugehörigen Installationsgeräten (17) auf der Platine (18) in Verbindung.

Die Fig. 4 und 5 zeigen, daß die Abschlußplatte (8) - analog kann das auch für die Abschlußplatte (7) vorgesehen sein - mit einer Öffnung (28) versehen ist, auf die später noch eingegangen wird, sowie mit einem Anschlußfeld (29) mit Öffnungen (30, 31, 32 und 33), in die Anschlußtüllen oder Befestigungstüllen für den Anschluß verschiedener Leitungen, zum Beispiel für den Anschluß der Leitung (27) oder des Kabels (16) vorgesehen sind. Die Abschlußplatten (7 und 8) sind außerdem mit Öffnungen (34) zum Durchstecken von Schrauben mit selbstschneidendem Gewinde versehen, die in die offenen Enden von Profilierungen (35, 36) eingreifen können, die an dem Profil (2) (s. Fig. 3) vorgesehen sind. Die Abschlußplatten (7 bzw. 8) können aus Aluminium, aber auch aus Kunststoff bestehen. Sie sind mit einem Rand (37) und mit Verstärkungsrippen (38) versehen. Der umlaufende Rand (37) besitzt einen Absatz (38), der der Kontur des Profiles (2) und der Kontur der entsprechenden Abdeckplatten (3, 4 oder 5) und damit der Kontur der Stirnseiten des Gehäuses (1) angepaßt ist. Nach dem Aufsetzen und Verschrauben der Abschlußplatten (7 bzw. 8) entsteht daher ein nach außen abgedichtetes Gehäuse.

Wie die Fig. 3 zeigt, sind in dem Profil (2) noch zwei durchgehende Ausnehmungen (39 bzw. 40) vorgesehen, von denen die Ausnehmung (39) durch zwei parallel zueinander verlaufende und in das Innere des Gehäuses (1) hereinragende Rippen (41) gebildet wird, die auf ihrer einander zugewandten Seite der Kontur eines Kreises entsprechen, der den Durchmesser der Öffnung (28) in der Abdeckplatte (8) besitzt. Durch diese Öffnung (28) können daher elastisch radial aufweitbare und zusammendrückbare Segmente (42) geschoben werden, die sich dann an den Rippen (41) abstützen und Teil einer Halterung (43) sein können, mit der das Gehäuse (1) schwenkbar oder auch fest an einem Tisch oder an einem Teil eines Krankenbettes anbringbar ist. Die Segmente (42) sind fest verbunden mit einem Zapfen (44), der dann zur Halterung (43) führt und der in der Fig. 1 angedeutet ist.

Die Ausnehmung (40) befindet sich an der unteren Außenkante des Profiles (2) und des Gehäuses (1). Sie ist nach außen offen und an dieser offenen Seite durch eine transparente Scheibe (45) abgedeckt, die in entsprechenden Nuten am Rand der Ausnehmung (40) eingeschoben ist. Im Inneren der Ausnehmung (40), die noch eine schwalbenschwanzförmige Nut (46) an ihrem dem Inneren des Gehäuses vorgesehenen Teil aufweist, ist eine Beleuchtungseinrichtung (47) eingesetzt, die mit einem Fuß in die Nut (46) eingeschoben ist. Wenn die Beleuchtungseinrichtung nicht über die gesamte Breite des Gehäuses (1) durchgehen soll, sondern beispielsweise nur im Bereich der mittleren Abdeckplatte (4) vorgesehen sein soll, dann ist es auch möglich, in den Bereichen der Abdeckplatten (3 und 5) seitlich neben die transparente Scheibe (45) entsprechend ausgebildete, aber undurchsichtige Scheiben einzusetzen, so daß nur ein Teil der Gesamtlänge des Gehäuses für die Beleuchtung ausgelegt ist.

In allen Fällen bietet die erfindungsgemäße Ausgestaltung aber den Vorteil, daß von der Seite her wahlweise Moduleinheiten mit oder ohne Platinen, aber mit Abdeckplatten einschiebbar sind, die je nach Art und Umfang der gewünschten Funktionen zu einem längeren oder kürzeren Gehäuse führen, daß durch Abschneiden des gezogenen Profiles (2) gestaltet werden kann. Durch die neue Ausgestaltung wird daher eine Fülle von Wahlmöglichkeiten für ein Bett-Bediengerät verwirklichbar, ohne daß der Herstellungsaufwand zu groß wird.

**Patentansprüche**

1. Bett-Bediengerät für Ruf- und Sprechanlagen in Krankenhäusern o.dgl. mit einem Gehäuse, mit in das Gehäuse eingesetzten Anschlußgeräten für die Ruf- und Sprechanlage und mit Bedienungseinrichtungen für die Betätigung der Ruf- und Sprechanlage, dadurch gekennzeichnet, daß das Gehäuse aus einem gezogenen, einseitig offenen und auf Länge abgeschnittenen Profil (2) und aus diesem Profil zugeordneten Abdeckplatten (3, 4, 5) besteht, die sichtbare Bedienungsfelder (11 bis 15, 20, 21, 22) und angebaute Geräte (9, 10) aufweisen und modulartig wahlweise nebeneinander in Aufnahmeleisten (6) des Profiles (2) einsetzbar sind.

2. Bett-Bediengerät nach Anspruch 1, dadurch gekennzeichnet, daß den Abdeckplatten (3, 4, 5) Platinen (18) als Tragplatten für Installationsgeräte (17) und Anschlußeinrichtungen zu benachbarten Moduleinheiten zugeordnet sind.

3. Bett-Bediengerät nach den Ansprüchen 1 und 2, dadurch gekennzeichnet, daß die Platinen (18) und die Abdeckplatten (3, 4, 5) seitlich in Längsnuten (6) des Profiles (2) eingeschoben sind.

4. Bett-Bediengerät nach Anspruch 3, dadurch gekennzeichnet, daß an den offenen Enden des durch das Profil (2) und die Abschlußplatten (3, 4, 5) gebildeten Hohlkörpers Abschlußplatten (7, 8) vorgesehen sind.

5. Bett-Bediengerät nach Anspruch 1, dadurch gekennzeichnet, daß das Profil (2) an einer Unterkante eine durchgehende und nach außen offene Ausnehmung (40) zur Aufnahme einer Beleuchtungseinrichtung (47) aufweist.

6. Bett-Bediengerät nach Anspruch 5, dadurch gekennzeichnet, daß die Ausnehmung (40) durch eine transparente Scheibe (45) abgeschlossen ist.

7. Bett-Bediengerät nach Anspruch 1, dadurch gekennzeichnet, daß das Profil (2) eine Aussparung (39) zum Ansetzen einer Halterung (43) für das Gehäuse besitzt.

8. Bett-Bediengerät nach Anspruch 7, dadurch gekennzeichnet, daß die Aussparung (39) durch zwei parallel zueinander verlaufende Rippen (41) gebildet ist, die auf der einander zugewandten Seite mit einer kreisabschnittförmigen Kontur versehen sind.

9. Bett-Bediengerät nach Anspruch 4, dadurch gekennzeichnet, daß dem Profil (2) Profilierungen (35, 36) zum Einsetzen von selbstschneidenden Schrauben zur Befestigung der Abschlußplatten (7, 8) zugeordnet sind.

Fig. 1

Fig. 2

Fig. 3

Fig. 4

Fig. 5